# EUROPÄISCHE PATENTSCHRIFT

(11) **EP 1 256 191 B1**
(45) Veröffentlichungstag und Bekanntmachung des Hinweises auf die Patenterteilung: **09.06.2004**
(21) Anmeldenummer: 00993295.5
(22) Anmeldetag: 27.11.2000
(51) Int. Cl.: H04B 7/08

(54) **VERFAHREN ZUR AUSWAHL VON ANTENNEN EINER EMPFANGSEINRICHTUNG IN EINEM FUNKSYSTEM, INSBESONDERE EINEM MOBILFUNKSYSTEM**
METHOD FOR SELECTING ANTENNAE OF A RECEIVING DEVICE IN A RADIO SYSTEM, ESPECIALLY A MOBILE RADIO SYSTEM
PROCEDE DE SELECTION D'ANTENNES D'UN DISPOSITIF DE RECEPTION DANS UN SYSTEM RADIO, EN PARTICULIER DANS UN SYSTEM DE TELEPHONIE MOBILE

(30) Priorität: 30.11.1999 DE 19957534
(43) Veröffentlichungstag der Anmeldung: 13.11.2002
(73) Patentinhaber: Infineon Technologies AG, 81669 München (DE)
(72) Erfinder: BOETZEL, Ulrich, 41564 Kaarst (DE); KRANZ, Christian, 40885 Ratingen (DE); SCHMANDT, Bernd, 40878 Ratingen (DE)
(74) Vertreter: Graf Lambsdorff, Matthias, Dr.
(86) Internationale Anmeldenummer: PCT/DE2000/004238
(87) Internationale Veröffentlichungsnummer: WO 2001/041329

(56) Entgegenhaltungen:
- WO-A-98/27670
- WO-A-99/09678

## Beschreibung

Die Erfindung betrifft ein Verfahren zur Auswahl von Antennen einer Empfangseinrichtung in einem Funksystem, insbesondere einem Mobilfunksystem, nach dem Oberbegriff von Patentanspruch 1.

Um bei einem Funksystem eine gute Übertragungsqualität bzw. Funkverbindung zwischen einer Sende- und Empfangseinrichtung, insbesondere einer Basis- und einer Mobilstation eines Mobilfunksystems, zu erreichen, ist der Einsatz mehrerer Antennen in der Empfangseinrichtung bekannt. Es wird dann jeweils über die Antenne empfangen, welche die beste Empfangsqualität unter den vorhandenen Antennen aufweist (sogenannte Antenna-Diversity). Selbstverständlich werden die verschiedenen Antennen auch zum Senden benutzt. Durch die Auswahl unter verschiedenen Antennen soll der Einfluß von Fading, insbesondere von Signaleinbrüchen bei der Übertragung beispielsweise aufgrund einer Störung des Funkkanals, vermindert werden. Die verschiedenen Antennen müssen einen geometrischen Abstand aufweisen, der eine Beeinflussung der Antennen untereinander ausschließt. Diversity-Verfahren sind in K.David, T.Benkner, "Digitale Mobilfunksysteme", Teubner Verlag, 1996, unter 2.1.7 beschrieben. Grundgedanke der (Raum-)Diversity-Verfahren ist die Unkorreliertheit der über verschiedene Antennen empfangenen Signale, vorausgesetzt der geometrische Abstand der Antenne ist groß genug.

Ein DECT (Digital Enhanced Cordless Telephone)-System arbeitet beispielsweise zunächst auf einer Übertragungsfrequenz, d.h. es werden auf einer ausgewählten Frequenz Funksignale übertragen. Durch einen sogenannten Handover wechselt das DECT-System dann die Übertragungsfrequenz. Bei jedem Wechsel der Übertragungsfrequenz wird aus einer Vielzahl von Antennen, meistens zwei versetzt angeordneten Antennen, die Antenne mit der besten Empfangsqualität zum Empfang der Funksignale ausgewählt. Allerdings ist dazu eine ständige Überwachung der Verbindungsqualität, d.h. der Feldstärke der empfangenen Signale, erforderlich. Liegt die Empfangsfeldstärke einer ausgewählten Antenne unter einer vorgegebenen Stärke, wird auf eine Antenne mit höherer Empfangsfeldstärke umgeschaltet.

Aufgabe er vorliegenden Erfindung ist es, ein Verfahren zur Auswahl von Antennen in einem Empfangseinrichtung anzugeben, daß einerseits einfach auszuführen ist und andererseits insbesondere bei auf langsamen Frequenzsprungverfahren basierenden Funksystemen (Slow Frequency Hopping Systemen) vorteilhaft anwendbar ist.

Diese Aufgabe wird durch ein Verfahren mit den Merkmalen von Patentanspruch 1 gelöst. Vorteilhafte Ausgestaltungen des Verfahrens sind Gegenstand der abhängigen Patentansprüche.

Ein wesentlicher Gedanke der Erfindung ist die Auswertung einer Tabelle mit Daten über die Empfangsqualität jeder Antenne bei einem Wechsel der Übertragungsfrequenz und der von dem Ergebnis der Auswertung abhängigen Auswahl einer Antenne in einem Empfangseinrichtung. Dadurch, daß bei einem Wechsel der Übertragungsfrequenz eine Tabelle mit entsprechenden Daten über die Empfangsqualität der Antennen mitgeführt wird, kann anhand der Tabelle die Antenne mit der besten Empfangsqualität, in der Regel der höchsten Empfangsfeldstärke, ausgewählt werden. Die Daten, die den Antennen zugeordnet sind, können auf die Empfangsfeldstärke oder die Empfangsleistung oder eine Kombination verschiedener Parameter einer Antenne ausgelegt sein. Die Daten sind sinnvollerweise im wesentlichen zur Auswertung der Empfangsqualität einer Antenne nutzbar. Voraussetzung für die Funktion des erfindungsgemäßen Verfahrens ist eine nur langsame Änderung des Funkkanals, über den die Empfangseinrichtung Signale empfängt. Bei einer langsamen Änderung ändert sich nämlich der Funkkanal und die damit zusammenhängenden Übertragungseigenschaften kaum und die in der Tabelle abgelegten Daten entsprechen nahezu den tatsächlichen Empfangseigenschaften bzw. -qualitäten der einzelnen Antennen. Es sei noch bemerkt, daß dieses Verfahren selbstverständlich auch in einem Sende-/Empfangseinrichtung, beispielsweise einem Mobiltelefon oder Schnurlostelefon, vorteilhaft angewendet werden kann, also nicht nur in einer Empfangseinrichtung einsetzbar ist.

Vorzugsweise weist die Tabelle Daten über die Empfangsqualität jeder Antenne bei jeder Übertragungsfrequenz auf. Für jede Antenne ist eine der Anzahl von Übertragungsfrequenzen entsprechende Vielzahl von Tabelleneinträgen vorgesehen. Bei einem Wechsel der Übertragungsfrequenz werden dann verfahrensgemäß alle der Übertragungsfrequenz zugeordneten Einträge der Tabelle durchgesehen und der größte Eintrag entsprechend der Antenne mit der besten Empfangsqualität gesucht. Die diesem Eintrag zugeordnete Antenne wird dann bei der vorgesehenen Übertragungsfrequenz genutzt. Durch geeignete Such-Algorithmen kann der Suchvorgang entsprechend verkürzt werden, so daß insbesondere keine Unterbrechung einer Verbindung auftritt.

Bei jedem Wechsel von einer ersten auf eine zweite Übertragungsfrequenz werden vorzugsweise die der zweiten Übertragungsfrequenz entsprechenden Einträge in der Tabelle derart ausgewertet, daß eine Antenne mit der für die zweite Übertragungsfrequenz günstigsten Empfangsqualität ausgewählt wird. Unter günstigster Empfangsqualität wird nicht einfach nur die größte Empfangsfeldstärke, sondern insbesondere auch die Empfangsleistung oder das beste Signal-Rausch-Verhältnis verstanden. Für jede Antenne kann für die zweite Übertragungsfrequenz eine Vielzahl von Einträgen der Tabelle vorgesehen sein, die verschiedenste Parameter der Antenne bei der zweiten Übertragungsfrequenz darstellen. Ein geeigneter Algorithmus kann dann aus den Parametern jeder Antenne einen Faktor berechnen, der zur Auswahl der für die zweite Übertragungsfrequenz geeignetsten Antenne dient.

Vorzugsweise wird bei jedem Wechsel auf eine Übertragungsfrequenz die Empfangsfeldstärke jeder Antenne bei dieser Übertragungsfrequenz gemessen. In der Tabelle werden dann entsprechende Einträge für die Empfangsqualität entsprechend der Empfangsfeldstärke jeder Antenne bei dieser Übertragungsfrequenz gespeichert. Dies ermöglicht vorteilhafterweise eine laufende Aktualisierung der Tabelleneinträge. Beispielsweise kann die Messung bereits nach der Auswahl einer Antenne für die Übertragungsfrequenz durchgeführt werden. Dies kann beispielsweise parallel zur Übertragung bzw. zum Empfang von Signalen erfolgen. Änderungen des Funkkanals zwischen einem Übertragungsfrequenzwechsel können insbesondere dadurch aufgefangen werden, daß die Messungen zeitlich genau zwischen den Zeitpunkten zum Wechseln der Übertragungsfrequenz erfolgen.

Das Empfangseinrichtung ermittelt vorzugsweise bei einer ersten Übertragungsfrequenz mit einer ersten Antenne eine Sprungsequenz durch die Übertragungsfrequenzen; anschließend werden alle Einträge der Empfangsqualität der ersten Antenne und daraufhin der weiteren Antennen ermittelt und in der Tabelle gespeichert. Dadurch wird erst eine Tabelle mit Daten über die Empfangsqualität aufgebaut. Vorzugsweise erfolgt dieser Aufbau bei der Inbetriebnahme der Empfangseinrichtung, also beispielsweise beim "Einbuchen" eines Mobiltelefons in einem Mobilfunksystem oder beim Einschalten eines Schnurlostelefons. Ist eine Tabelle erstellt, kann mit dem erfindungsgemäßen Verfahren entsprechend zwischen den einzelnen Antennen umgeschaltet werden.

Vorzugsweise wechselt die Empfangseinrichtung mindestens 75 mal pro Sekunde die Übertragungsfrequenz. Bei sogenannten langsamen Frequenzsprungsverfahren (Slow Frequency Hopping Systeme) muß mindestens 75 mal pro Sekunde die Übertragungsfrequenz gewechselt werden, dies entspricht den Vorschriften zur Zulassung von Funksystemen im Frequenzbereich von 2,4 GHz der FCC (Federal Communication Commisssion).

Die Tabelle mit Daten über die Empfangsqualität jeder Antenne weist bevorzugt zusätzliche Parameter für jede Antenne und Übertragungsfrequenz auf. Diese zusätzlichen Parameter können beispielsweise eine zwingende Auswahl einer bestimmten Antenne bei einer bestimmten Übertragungsfrequenz betreffen.

Vorzugsweise ist das Funksystem eine WDCT- oder Bluetooth-Funksystem. Bei solchen Systemen kann das erfindungsgemäße Verfahren besonders vorteilhaft eingesetzt werden.

Die Empfangseinrichtung weist insbesondere zwei Antennen auf, die vorteilhafterweise an der Empfangseinrichtung unterschiedlich - beispielsweise um 90° versetzt - angeordnet sind. Dadurch wird eine gute Verbindungsqualität für alle Übertragungsfrequenzen des Funksystems mit einem möglichst geringen Aufwand erreicht.

Weitere Vorteile und Anwendungsmöglichkeiten ergeben sich aus der nachfolgenden Beschreibung eines Ausführungsbeispiels in Verbindung mit der Zeichnung. In der Zeichnung zeigt

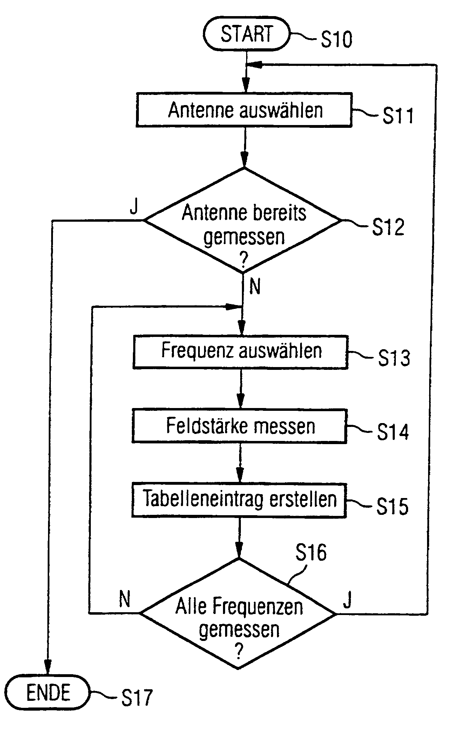

Figur 1 ein Ablaufdiagramm zum Aufbau einer Tabelle zur Durchführung des erfindungsgemäßen Verfahrens.

In Figur 1 ist ein Ablaufdiagramm dargestellt, das die Erzeugung einer Tabelle zur Verwendung für das erfindungsgemäße Verfahren darstellt. Eine solche Tabelle muß beispielsweise beim Einschalten oder Einbuchen eines Schnurlostelefons bzw. Mobiltelefons in einem Schnurlostelefon-System bzw. Mobilfunksystem erstellt werden, da zu diesem Zeitpunkt noch keine Informationen über die Verbindungsqualität, den Funkkanal und die Empfangsqualität der Verschiedenen Antennen einer Empfangseinrichtung vorliegen. In diesem Ausführungsbeispiel soll die Empfangseinrichtung die Basisstation eines Schnurlostelefons nach dem WDCT (Wideband Digital Cordless Telephone)-Standard sein. Genauso gut kann das Funksystem aber auch nach dem Bluetooth-Standard arbeiten. Voraussetzung für die korrekte Funktion des erfindungsgemäßen Verfahrens ist allerdings eine nur langsame Änderung der Eigenschaften des Funkkanals, wie dies bei den vorher genannten Systemen der Fall ist. Die Systeme sollten zudem Slow-Frequency-Hopping-Systeme sein, also nicht zu oft innerhalb einer Sekunde die Übertragungsfrequenz wechseln.

Die Basisstation weist zwei Antennen auf, die in einem ausreichenden Abstand von beispielsweise einigen Zentimetern an der Basisstation angeordnet sind. Vorteilhafterweise sind die beiden Antennen ferner unterschiedlich ausgerichtet, so daß über die Antennen Signale aus verschiedenen Empfangsrichtungen empfangen werden. Idealerweise sollten die Antennen jeweils Signale empfangen, die einen völlig unterschiedlichen Ausbreitungsweg genommen haben.

In Schritt S10 wird das Funksystem in Betrieb genommen und die Basisstation und Schnurlostelefone werden zueinander synchronisiert. Hierzu wird nach einem vorgegebenen Algorithmus in der Basisstation die erste Antenne der beiden Antennen in Schritt S11 ausgewählt, d.h. eine Empfangsschaltung der Basisstation wird mit der ersten Antenne zum Signalempfang verbunden.

In Schritt S12 wird von der Basisstation geprüft, ob die erste Antenne bereits gemessen wurde. Dieser Schritt spielt anfangs keine Rolle, erst nachdem bereits einige Antennen gemessen wurden kommt diesem eine Bedeutung zu.

In Schritt S13 eine Übertragungsfrequenz zum Austausch der Synchronisationssignale gewählt. Meistens ist diese übertragungsfrequenz vorgegeben. Stehen beispielsweise zehn Frequenzen mit einem Kanalabstand von 10 MHz ab 1800 MHz zur Verfügung, so wird die Synchronisation bei 1800 MHz durchgeführt.

Basisstation und Schnurlostelefone tauschen nun Synchronisationssignale aus. Dazu sendet und empfängt die Basisstation Signale über die erste Antenne. In Schritt S14 mißt die Basisstation die Feldstärke empfangener Synchronisationssignale; dies kann nur einmal oder während des Synchronisationsvorgangs sinnvollerweise auch mehrmals erfolgen.

Aus der gemessenen Empfangsfeldstärke wird nun ein Wert bzw. Faktor ermittelt, der für die Empfangsqualität der ersten Antenne charakteristisch ist. Ist die Empfangsfeldstärke mehrmals gemessen worden, kann ein Mittelwert gebildet werden. Dieser Wert bzw. Faktor wird nun in Schritt S15 in eine Tabelle eingetragen, in der für jede der beiden Antennen pro Übertragungsfrequenz ein solcher Faktor bzw. Wert durch den Algorithmus abgelegt wird.

In Schritt S16 wird geprüft, ob bereits alle zur Verfügung stehenden Übertragungsfrequenzen durchgemessen sind. Ist dies der Fall, wird auf die zweite Antenne umgeschaltet, so daß der Algorithmus die Tabelleneinträge für diese Antenne erstellt. Sind noch nicht alle Übertragungsfrequenzen gemessen worden, springt der Algorithmus wieder zu Schritt S13, um eine neue Übertragungsfrequenz auszuwählen. Die Auswahl der Übertragungsfrequenz erfolgt dabei gemäß dem durch das Funksystem vorgegebenen Bedingungen.

Sind alle Frequenzen für jede der Antennen gemessen worden, ist die Tabelle erstellt und der Algorithmus endet bei Schritt S17.

Anhand der Tabelle kann nun bei einem Wechsel der Übertragungsfrequenz in der Basisstation die Antenne ausgewählt werden, deren Empfangsqualität entsprechend dem gespeicherten Wert bzw. Faktor am besten ist. Die Verbindungspartner, d.h.

Schnurlostelefon und Basisstation, können beispielsweise bei bestimmten Frequenzen auch direkt die Verwendung einer bestimmten Antenne vereinbaren. Hierzu kann durch einen bestimmten vorgegebenen Tabelleneintrag eine der vorhandenen Antennen bei einer bestimmten Übertragungsfrequenz fest ausgewählt werden.

## Patentansprüche

1. Verfahren zur Auswahl von Antennen einer Empfangseinrichtung in einem Funksystem, insbesondere einem Mobilfunksystem, wobei
- zwischen mehreren Übertragungsfrequenzen, die zur Übertragung von Funksignalen vorgesehen sind, mindestens einmal während einer Funkverbindung mittels eines Frequenzsprungverfahrens gewechselt wird,
**dadurch gekennzeichnet, dass**
- bei einem Wechsel der Übertragungsfrequenz eine Tabelle mit Daten über die Empfangsqualität jeder Antenne bei jeder Frequenz ausgewertet wird, und
- eine der Antennen in Abhängigkeit von dem Ergebnis der Auswertung ausgewählt wird.

2. Verfahren nach Anspruch 1, **dadurch gekennzeichnet, daß** bei jedem Wechsel von einer ersten auf eine zweite Übertragungsfrequenz die der zweiten Übertragungsfrequenz entsprechenden Einträge in der Tabelle derart ausgewertet werden, daß die Antenne mit der für die zweite Übertragungsfrequenz günstigsten Empfangsqualität ausgewählt wird.

3. Verfahren nach einem der vorhergehenden Ansprüche, **dadurch gekennzeichnet, daß** bei jedem Wechsel auf eine Übertragungsfrequenz die Empfangsfeldstärke jeder Antenne bei dieser Übertragungsfrequenz gemessen wird und in der Tabelle entsprechende Einträge für die Empfangsqualität entsprechend der Empfangsfeldstärke jeder Antenne bei dieser Übertragungsfrequenz gespeichert werden.

4. Verfahren nach einem der vorhergehenden Ansprüche, **dadurch gekennzeichnet, daß** das Empfangseinrichtung bei einer ersten Übertragungsfrequenz mit einer ersten Antenne eine Sprungsequenz durch die Übertragungsfrequenzen ermittelt und anschließend alle Einträge der Empfangsqualität der ersten Antenne und daraufhin der weiteren Antennen ermittelt und in der Tabelle speichert.

5. Verfahren nach einem der vorhergehenden Ansprüche, **dadurch gekennzeichnet, daß** die Empfangseinrichtung mindestens 75 mal pro Sekunde die Übertragungsfrequenz wechselt.

6. Verfahren nach einem der vorhergehenden Ansprüche, **dadurch gekennzeichnet, daß** die Tabelle mit Daten über die Empfangsqualität jeder Antenne zusätzliche Parameter für jede Antenne und Übertragungsfrequenz aufweist.

7. Verfahren nach Anspruch 6, **dadurch gekennzeichnet, daß** die zusätzlichen Parameter eine zwingende Auswahl einer bestimmten Antenne bei einer bestimmten Übertragungsfrequenz betreffen.

8. Verfahren nach einem der vorhergehenden Ansprüche, **dadurch gekennzeichnet, daß** das Funksystem eine WDCToder Bluetooth-Funksystem ist.

9. Verfahren nach einem der vorhergehenden Ansprüche, **dadurch gekennzeichnet, daß** die Empfangseinrichtung zwei Antennen aufweist.

## Claims

1. Method for selecting antennas of a receiving device in a radio system, especially a mobile radio system, with
- at least one change being made during a radio connection by means of a frequency hopping method between a number of transmission frequencies which are provided for transmission of radio signals,
**characterized in that**
- a table with data relating to the reception quality of each antenna at each frequency is evaluated on each change to the transmission frequency, and
- one of the antennas is selected as a function of the result of the evaluation.

2. Method according to Claim 1, **characterized in that** the entries in the table which correspond to the second transmission frequency are evaluated on each change from a first transmission frequency to a second transmission frequency such that the antenna with the best reception quality for the second transmission frequency is selected.

3. Method according to one of the preceding claims, **characterized in that** the reception field strength of each antenna at a given. transmission frequency is measured whenever a change is made to this transmission frequency, and corresponding entries for the reception quality are stored in the table, corresponding to the reception field strength of each antenna at this transmission frequency.

4. Method according to one of the preceding claims, **characterized in that** the receiving device determines a hopping sequence through the transmission frequencies for a first transmission frequency using a first antenna, and then determines all the entries for the reception quality of the first antenna, and then for the further antennas, and stores these in the table.

5. Method according to one of the preceding claims, **characterized in that** the receiving device changes the transmission frequency at least 75 times per second.

6. Method according to one of the preceding claims, **characterized in that** the table with data relating to the reception quality of each antenna has additional parameters for each antenna and transmission frequency.

7. Method according to Claim 6, **characterized in that** the additional parameters relate to the necessity for selection of a specific antenna for a specific transmission frequency.

8. Method according to one of the preceding claims, **characterized in that** the radio system is a WDCT or . bluetooth radio system.

9. Method according to one of the preceding claims, **characterized in that** the receiving device has two antennas.

## Revendications

1. Procédé de sélection d'antennes d'un dispositif de réception dans un système hertzien, en particulier un système de téléphonie mobile, dans lequel
- on commute entre plusieurs fréquences transmission qui sont prévues pour la transmission de signaux hertziens, au moins une fois pendant la liaison hertzienne au moyen d'un procédé de saut fréquence,
**caractérisé en ce que**
- lors d'un changement de fréquence de transmission, on exploite une table comportant des données relatives à la qualité de réception de chaque antenne pour chaque fréquence, et
- on sélectionne l'une des antennes en fonction du résultat de l'exploitation.

2. Procédé selon la revendication 1, **caractérisé en ce que**, à chaque passage d'une première fréquence de transmission à une deuxième fréquence de transmission, les enregistrements correspondant à la deuxième fréquence de transmission dans la table sont exploités de façon à sélectionner l'antenne ayant la qualité de réception la plus appropriée pour la deuxième fréquence de transmission.

3. Procédé selon l'une des revendications précédentes, **caractérisé en ce que**, à chaque changement de fréquence de transmission, l'intensité du champ de réception de chaque antenne est mesurée à cette fréquence de transmission et les enregistrements correspondants concernant la qualité de réception en fonction de l'intensité du champ de réception de chaque antenne sont mémorisés dans la table pour chaque fréquence transmission.

4. Procédé selon l'une des revendications précédentes, **caractérisé en ce que** le dispositif de réception détermine à une première fréquence de transmission et avec une première antenne une séquence de saut des fréquences de transmission, puis détermine tous les enregistrements de la qualité de réception de la première antenne puis des autres antennes et les mémorise dans la table.

5. Procédé selon l'une des revendications précédentes, **caractérisé en ce que** le dispositif de transmission change de fréquence de transmission au moins 75 fois par seconde.

6. Procédé selon l'une des revendications précédentes, **caractérisé en ce que** la table comportant des données relatives à la qualité de la réception de chaque antenne comporte des paramètres supplémentaires pour chaque antenne et chaque fréquence transmission.

7. Procédé selon la revendication 6, **caractérisé en ce que** les paramètres supplémentaires satisfont un choix définitif d'une antenne déterminée à une fréquence de transmission déterminée.

8. Procédé selon l'une des revendications précédentes, **caractérisé en ce que** le système hertzien est un système WDCT ou Bluetooth.

9. Procédé selon l'une des revendications précédentes, **caractérisé en ce que** le dispositif de réception comporte deux antennes.
